# EUROPÄISCHE PATENTANMELDUNG

(11) **EP 0 616 491 A1**
(43) Veröffentlichungstag der Anmeldung: **21.09.1994**
(21) Anmeldenummer: 94103324.3
(22) Anmeldetag: 04.03.1994
(51) Int. Cl.: H05K 7/14, H02B 1/36

(54) **Kippvorrichtung für in Gehäusern befindliche Baueinheiten**

(30) Priorität: 19.03.1993 DE 9304112 U
(71) Anmelder: Siemens Nixdorf Informationssysteme Aktiengesellschaft, D-33102 Paderborn (DE)
(72) Erfinder: Freitag, Paul, D-32839 Steinheim (DE); Röschlein, Rolf, D-33106 Paderborn-Elsen (DE); Kohlhage, Hermann, D-33102 Paderborn (DE); Wendland, Bruno, D-33102 Paderborn (DE)
(74) Vertreter: Fuchs, Franz-Josef, Dr.-Ing.

(57) **Zusammenfassung**

Die Erfindung bezieht sich auf eine Kippvorrichtung für in Gehäusen befindliche, über Teleskopschienen ausfahrbare Baueinheiten, wie z.B. elektronische Drucker. Diese sind für den Bediener im eingebauten Zustand schwer zugänglich. Um die Zugänglichkeit zu verbessern, sieht die Erfindung vor, an den Teleskopschienen (1) einen Tragrahmen (2) anzubringen und an diesen und den Teleskopschienen (1) eine halbkreisförmig ausgebildete, feststehende Rastscheibe (3) mit mindestens zwei Rastnuten (4,8) zu befestigen. An einem mit der Baueinheit (9) festgekoppelten Riegelhebel (5) befindet sich ein Rastbolzen (6), der beim Schwenken des Riegelhebels (5) an der Peripherie (7) der Rastscheibe (9) entlang fährt, bis er in eine der Rastnuten (4,8) eingreift. Dadurch wird der Nachteil der schweren Zugänglichkeit des Gerätes in einfacher Weise behoben.

## Beschreibung

Die Erfindung betrifft eine Kippvorrichtung für in Gehäusen befindliche, über Teleskopschienen ausfahrbare Baueinheiten, wie z.B. elektronische Drucker.

Bei Baueinheiten, die in Gehäusen angebracht sind, wie z.B. bei Druckern, ist ihre Zugänglichkeit nur bedingt möglich. Das ist vor allem dann sehr störend, wenn an der jeweiligen Baueinheit Wartungen oder Reparaturen vorgenommen werden müssen, oder wenn bei Druckern Papier nachgelegt oder z.B. Anzeigelampen beobachtet werden sollen.

Aufgabe der vorliegenden Erfindung ist es daher, die betreffende Baueinheit, wie z.B. einen Drucker, der sich in einem Gehäuse befindet, für das Bedien- und Wartungspersonal gut zugänglich zu machen.

Zur Lösung dieser Aufgabe wird die ausfahrbare Baueinheit mit einer Kippvorrichtung versehen, die derart ausgebildet ist, daß an den Teleskopschienen ein verschiebbarer Tragrahmen angebracht ist, daß vor diesem Tragrahmen und an diesem und den Teleskopschienen eine halbkreisförmig ausgebildete feststehende Rastscheibe mit mindestens zwei Rastnuten befestigt ist, und daß sich an einem mit der Baueinheit fest gekoppelten Riegelhebel ein Rastbolzen befindet, der beim Schwenken des Riegelhebels an der Peripherie der Rastscheibe entlangfahrbar ist, bis er in eine der Rastnuten eingreift.

Um eine bessere Arretierung bzw. ein selbständiges Zurückkippen der Baueinheiten in der ausgekippten Lage zu erreichen, können die Rastnuten, in die der Rastbolzen beim ausgeschwenkten Zustand der Baueinheit eingreift, hinterschnitten sein.

Durch diese Maßnahmen wird erreicht, daß die Baueinheit sowohl nach vorn als auch nach hinten ausfahrbar und mit einem einfachen Handgriff in eine Schräglage gekippt werden kann.

Bei Anbringen mehrerer Rastnuten kann die Schräglage der ausgezogenen und gekippten Baueinheit variiert werden.

Durch diese Konstruktion nach der Erfindung wird eine erhebliche Erleichterung der Bedienung durch den Operator erreicht, auch Wartungs- und Reparaturarbeiten können schnell und ohne großen Aufwand an Montagearbeit vorgenommen werden.

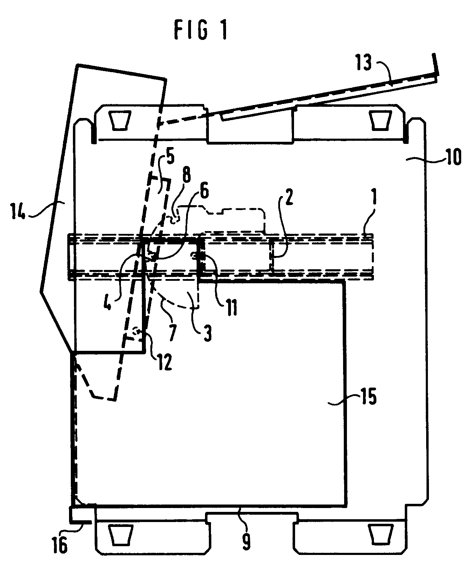

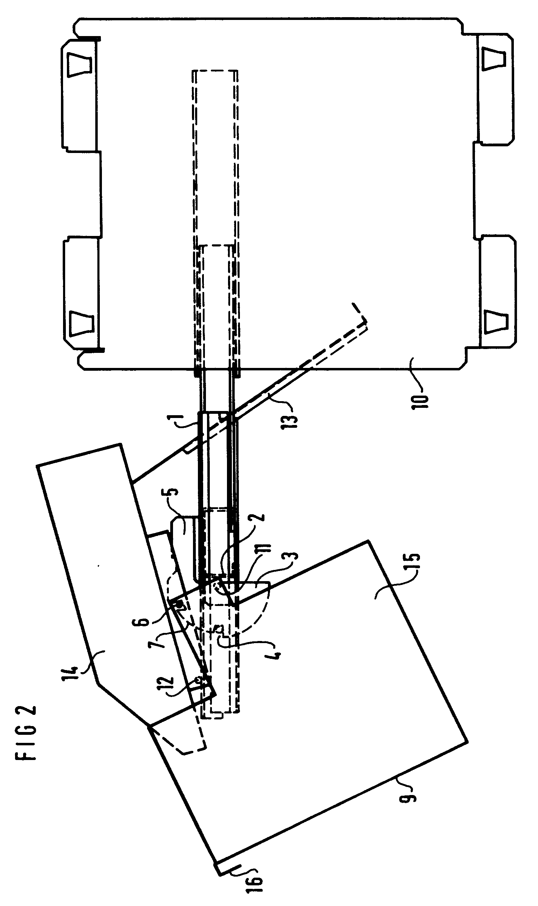

Anhand der Figuren 1 und 2 wird die Erfindung näher erläutert.

### Es zeigen

Figur 1 eine Baueinheit, wie z.B. einen Drucker mit Papierwanne und Druckermodul, im in das Gehäuse eingefahrenen Zustand und
Figur 2 die gleiche Baueinheit in aus dem Gehäuse ausgefahrenen und gekipptem Zustand.

Die Baueinheit besteht, wie aus Figur 1 ersichtlich, aus der Papierwanne 15 und dem Druckermodul 14. Diese Baueinheit befindet sich im Betriebszustand im Gehäuse 10. Sie ist dort an Teleskopschienen 1 aufgehängt, über die sie entweder nach vorn oder nach hinten ausgezogen werden kann. An den Teleskopschienen 1 ist eine Rastscheibe 3 befestigt, die im Ausführungsbeispiel zwei Rastnuten 4,8 enthält Mit der Baueinheit 9 ist der Riegelhebel fest verbunden und sitzt zugleich auf der Schwenkachse 12. Außerdem ist an diesem Riegelhebel ein Rastbolzen angebracht.

Soll nun die Baueinheit für Bedienungs- und Wartungszwecke zugänglich gemacht werden, so wird sie zunächst mit Hilfe der Teleskopschienen 1 aus dem Gehäuse 10 herausgezogen. In Figur 2 ist dabei die Baueinheit 9 nach vorne herausgezogen dargestellt. Es ist jedoch auch eine Variante möglich, die es gestattet, die Baueinheit 9 nach rückwärts aus dem Gehäuse 10 herauszufahren.

Ist die Baueinheit außerhalb des Gehäuses, so kann sie am Griff 16 nach vorn gezogen werden. Gleichzeitig wird der Eingriff des Rastbolzens 6 in die Rastnut 4 gelöst. Der Rastbolzen 6 läuft bei fortgesetzem Ziehen auf der Peripherie 7 der Rastscheibe 3 entlang, bis er die nächste Rastnut 8 findet, in die er einrastet. Damit ist der Schwenkvorgang beendet und die Baueinheit in der neuen gekippten Lage arretiert. Die Arretierung wird dadurch verstärkt, daß die Rastnut 8 an ihrer vorderen Flanke hinterschnitten ist. Will man die Baueinheit 9 wieder in ihre Ursprungslage zurückbringen, so ist lediglich erforderlich, den Riegelhebel 3 auszurasten, so daß der gesamte Bewegungsablauf in entgegengesetzter Richtung vonstatten geht.

## Patentansprüche

1. Kippvorrichtung für in Gehäusen befindliche, über Teleskopschienen ausfahrbare Baueinheiten, wie z.B. elektronische Drucker,
**dadurch gekennzeichnet,**
daß an den Teleskopschienen (1) ein verschiebbarer Tragrahmen (2) angebracht ist, daß vor diesen Tragrahmen (2) und an diesem und den Teleskopschienen (1) eine halbkreisförmig ausgebildete feststehende Rastscheibe (3) mit mindestens zwei Rastnuten (4,8) befestigt ist, und daß sich an einem mit der Baueinheit (9) fest gekoppelten Riegelhebel (5) ein Rastbolzen (6) befindet, der beim Schwenken des Riegelhebels (5) an der Peripherie (7) der Rastscheibe (9) entlangfahrbar ist, bis er in eine der Rastnuten (4,8) eingreift.

2. Kippvorrichtung nach Anspruch 1,
**dadurch gekennzeichnet,**
daß diejenigen Rastnuten (8), in die der Rastbolzen (6) beim ausgeschwenkten Zustand der Baueinheit (9) eingreift, hinterschnitten sind.
